# EUROPEAN PATENT SPECIFICATION

(11) **EP 2 924 831 B1**
(45) Date of publication and mention of the grant of the patent: **02.11.2016**
(21) Application number: 14162133.4
(22) Date of filing: 27.03.2014
(51) Int. Cl.: H02G 3/18

(54) **Adjustable floor box for floor trunk systems.**
Einstellbare Bodenkassette für Bodengepäckraumsysteme
Boîte de parquet réglable pour systèmes de coffre au sol

(43) Date of publication of application: 30.09.2015
(73) Proprietor: Vergokan, 9700 Oudenaarde (BE)
(72) Inventor: Leus, Thomas, 9050 GENTBRUGGE (BE); Delombaerde, Ellen, 9790 PETEGEM AAN DE SCHELDE (BE); Colpaert, Stijn, 9700 OUDENAARDE (BE)
(74) Representative: Gevers Patents

(56) References cited:
- EP-A2- 1 592 103
- EP-A2- 2 083 490
- GB-A- 2 443 897

## Description

### Technical field

The present invention relates to an adjustable floor box for floor trunk systems, wherein the height of the floor box is adjustable to the height of the floor trunking. The invention further relates to a cover assembly provided for adjusting the height of a covering part. The invention further relates to an adjustable floor box system comprising the adjustable floor box and the cover assembly.

### Background art

Floor boxes are typically used for connecting floor trunking in a floor. In the floor trunking, cables, such as for example electrical cables or networking cables, are guided throughout the floor. Floor trunking is connected to floor boxes from different directions such that the cables therein are guided in different directions to locations where they are needed. The floor boxes are also provided with an access at the top, such that the cables are accessible from above for being connected with external devices. For this reason the floor box is typically equipped with components such as sockets. The sockets are provided for plugging in the external devices, and which are connected to the cabling in the floor box.

The floor boxes and the floor trunking are arranged on a floor foundation, for example a concrete floor, and thereby connected with each other. Thereafter, intermediate layers of the floor are provided on the floor foundation, and thus also on the floor boxes and the floor trunking. The intermediate layers may for example be a layer of insulation material or a screed layer. To apply the intermediate layers it is important that the floor boxes are sealed off such that no or only a limited amount of floor material, such as for example insulation foam or screed, may enter the floor boxes. After applying the intermediate layers, the floor is provided with a floor covering, such as for example carpet or tiles.

A typical floor box comprises a bottom plate, side walls provided with openings for the floor trunking or at least configured for providing the openings for the floor trunking, and a covering part. The covering part may be a plate for covering the floor box, but may also be a cover frame which is arranged for holding a cover plate, or which is arranged with a hinged cover. The covering part may further also be provided with a component holder frame in which one or more component holders can be arranged. The component holders are provided for holding components such as for example sockets for plugging in external devices.

Floor boxes may be provided with a fixed height, meaning that the covering part is positioned at a fixed distance with respect to the bottom plate. When using this kind of floor boxes the floor has to be installed such that the upper surface of the floor is aligned with the upper surface of the covering part of the floor box. Due to errors in installing the floor this desired end result is not always achieved. This leaves the covering part of the floor box sticking out of the floor, or forms a recess in the floor, which is undesirable. This forms a danger for people walking on the floor.

Other types of floor boxes have a fixed height which is adapted only to the height of the floor trunking. This type of floor boxes is typically covered with a top plate provided with an opening. After installing the floor box on the floor foundation, the opening in the top plate is surrounded by a formwork element arranged on top of the floor box. This formwork element leaves an opening in the floor above the floor box when the floor is installed. In this floor opening a separate covering part may be suspended by means of a supporting edge provided on the covering part, which supporting edge supports on the floor around the opening. The separate covering part may comprise a cover frame, a cover, and a component holder frame wherein component holders are arranged for holding components, as described above. This has the disadvantage that the covering part is not supported by the floor box. This makes the use of this type of floor box less suitable for use under high load conditions. This type of floor boxes also has the disadvantage that different floor boxes with adapted heights have to be provided for floor trunking with different heights. Hence, it is not possible to adjust the height of the floor boxes to floor trunking with different heights. There are floor boxes with a fixed height adapted to floor trunking with the largest height to which also floor boxes with a lower height may be connected. Such floor boxes however have the disadvantage that they may be too high for use in floors with low heights.

Other types of floor boxes are provided such that the height of the covering part with respect to the bottom part may be adjusted. Examples of such adjustable floor boxes are shown in EP 1 592 103 A2 and EP 2 083 490 A2. Those floor boxes comprise adjusting means arranged between the bottom plate and the covering part for adjusting the height of the covering part with respect to the bottom plate. Hence, with the adjusting means the upper surface of the covering part may be aligned with the upper surface of the floor.

The floor boxes of EP 1 592 103 A2 and EP 2 083 490 A2 have the disadvantage that the entire covering part must be moved from its lowest position to the position wherein its upper surface is aligned with the upper surface of the floor. This is difficult to achieve in a quick way, since the covering part is supported by the adjusting means in each of its corners. First, one corner of the covering part is moved upwards with the adjusting means in said corner. This causes the covering part to become tilted, which makes it difficult to move the covering part higher in said corner. Hence, the other corners of the covering part have to be moved to the same height with the adjusting means in those corners. This procedure has to be repeated until the entire covering part is moved to the final position wherein its upper surface is aligned with the upper surface of the floor. This procedure is inefficient and time consuming.

The adjusting means of the floor boxes shown in EP 1 592 103 A2 and EP 2 083 490 A2 also have the disadvantage that they have a maximum height to which the height of the covering part may be adjusted. It is a problem if this maximum height is insufficient to get to the level of the upper surface of the floor. In such cases, there will be a recess in the floor at the position of the floor box, which needs to be fixed by additional means.

### Disclosure of the invention

It is an aim of the present invention to provide a floor box which provides a solution for the problems identified in known floor boxes.

This aim is achieved according to the invention with an adjustable floor box showing the technical characteristics of the characterising part of the first claim.

The invention provides an adjustable floor box for at least two types of floor trunking, each type of floor trunking having a different height, the adjustable floor box comprising:
- a bottom plate having side walls configured to provide openings for the floor trunking,
- a top plate for at least partially covering the bottom plate, and
- adjusting means for positioning the top plate at a distance from the bottom plate,
characterised in that the adjusting means comprises at least two predetermined positions, wherein a first predetermined position of the adjusting means positions the top plate at a distance from the bottom plate corresponding to the height of a first type of floor trunking, and wherein a second predetermined position of the adjusting means positions the top plate at a distance from the bottom plate corresponding to the height of a second type of floor trunking.

The adjusting means of the adjustable floor box according to the present invention has the advantage that the distance of the top plate with respect to the bottom plate can be quickly adjusted to the height of the floor trunking which is connected to the adjustable floor box. Floor trunking is typically provided in a number of standard heights, thus there is no need to provide the adjusting means for positioning the top plate at all possible distances from the bottom plate. In this way no time is lost during the installation of the adjustable floor box for positioning the top plate at the required distance from the bottom plate. The adjusting means only needs to be moved to one of the predetermined positions.

The adjustable floor box of the present invention has the advantage that one type of floor box may be used for floor trunking with different heights. After the floor box is installed on the floor foundation, a formwork element may be installed on top of the adjustable floor box. This formwork element leaves an opening in the floor above the floor box when the floor is installed. In this floor opening a covering part may be suspended, which is for example done by means of a supporting edge on the covering part, which supporting edge supports on the floor around the floor opening. The covering part preferably comprises a cover frame, and a cover plate for being arranged in the cover frame, and optionally also a component holder frame. The component holder frame is provided for arranging component holders therein, which hold components. These components could for example be sockets for plugging in external devices, which sockets are further connected with the cables in the floor box. The covering part may also be supported on the adjustable floor box or on a support structure provided in the adjustable floor box.

In an embodiment of the present invention the adjusting means comprises at least one adjusting part, each adjusting part comprising a bottom part and a top part with the top part supported by the bottom part in the at least two predetermined positions, and wherein the top plate is supported by each top part.

In an embodiment of the present invention the top part and the bottom part of each of the at least one adjusting part are rotatable with respect to each other around a common axis for moving each of the at least one adjusting part between the at least two predetermined positions.

The rotation of the top part and the bottom part with respect to each other has the advantage that it is a simple motion, which makes it easy to operate the at least one adjusting part.

Furthermore, it has the advantage that the areas of the bottom part and the top part where both parts support on each other in the at least two predetermined positions may be arranged around the common axis. This allows a compact design of the at least one adjusting part. This leaves as much space as possible in the adjustable floor box for the cables.

In an embodiment of the present invention one of the bottom part and the top part of each of the at least one adjusting part is provided with a plurality of legs, and the other part is provided with a corresponding number of inclined helical surfaces which are provided with at least two support positions in which the legs are positioned in the at least two predetermined positions of the adjusting means.

The combination of the legs and the inclined helical surfaces provided with the at least two support positions is an advantageous way for the bottom part and the top part to support on each other in the at least two predetermined positions. A first support position may for example be provided at the lowest end of the inclined helical surfaces. This first support position corresponding with a first predetermined position of the adjusting means. A second support position may then be provided higher up each inclined helical surface. This second support position corresponding with a second predetermined position of the adjusting means. Further support positions may be provided higher up the inclined helical surfaces.

The inclined helical surfaces also offer a good surface for the legs to slide on while moving from one support position to another support position. This has the advantage that the bottom part and the top part of the at least one adjusting part is easily moved between the different predetermined positions.

By means of the inclined helical surfaces it is also easy to provide the top part and the bottom part in such a way that they are rotatable with respect to each other around a common axis.

Preferably, the bottom part and the top part of the at least one adjusting part are provided with at least three support legs and inclined surfaces. In this way the top part and the bottom part support on each other in at least three locations, such that the top part and the bottom part may not tilt with respect to each other. This is beneficial for the stability of the at least one adjusting part.

The legs may be provided either on the top part or on the bottom part of the at least one adjusting part. If the legs are provided on the top part, then the bottom part is provided with the inclined helical surfaces. In this case, the legs of the top part support on the bottom part in the support positions provided on the inclined helical surfaces of the bottom part. If the legs are provided on the bottom part, then the top part is provided with the inclined helical surfaces. In this case, the top part supports with its support positions, provided on the inclined helical surfaces, on the legs of the bottom part.

In an embodiment of the present invention the legs and the inclined helical surfaces are arranged rotationally symmetric around a common axis.

The rotational symmetry in the arrangement of the legs and the inclined helical surfaces has the advantage that it does not matter on which one of the inclined helical surfaces each of the legs is positioned. This simplifies the design of the at least one adjusting part. In this way, it is also possible to move the legs from one inclined helical surface to the following inclined helical surface without affecting the function of the at least one adjusting part. This simplifies the operation of the at least one adjusting part.

In an embodiment of the present invention the support positions are provided with a protruding edge for averting the movement of the legs to support positions at lower parts of the inclined helical surfaces.

The protruding edges offer a simple means to prevent the legs from accidentally sliding out of the support positions in which they are positioned. This improves the stability of the at least one adjusting part. The protruding edge also has the advantage that it may be circumvented for a deliberate movement of the legs between different support positions. It only requires lifting the legs over the protruding edge to move the legs to another support position.

In an embodiment of the present invention the highest end of the inclined helical surfaces is provided with an upstanding wall for averting the legs from moving beyond the end of the inclined helical surfaces.

This has the advantage that if the legs are positioned in a support position at the highest end of the inclined helical surfaces, that the legs may not accidently slide off the inclined helical surfaces onto the following inclined helical surface. In this way a support position may also be provided at or near the top of the inclined helical surfaces, without risking the legs accidentally sliding off the inclined helical surface. In this way the full length of the inclined helical surfaces can be fully used for providing them with the necessary support positions. Nonetheless, the upstanding wall may be circumvented, if this is necessary, by lifting the legs over the upstanding wall.

In an embodiment of the present invention the top part and the bottom part are provided with cooperating guiding surfaces for guiding the movement of the bottom part and the top part with respect to each other between the at least two predetermined positions.

The cooperating guiding surfaces aid in the correct alignment of the top part and the bottom part with respect to each other while the at least one adjusting part is being moved between the at least two predetermined positions. This assures that the legs always get positioned correctly in the support positions on the inclined helical surfaces, thereby assuring a proper functioning of the at least one adjusting part at all times during operation. The guiding surfaces for example prevent undesired movements of the top part and the bottom part with respect to each other.

In an embodiment of the present invention the cooperating guiding surfaces are provided by a first circular wall on the bottom part and a second circular wall on the top part, wherein one of the circular walls is provided for being inserted in the other circular wall.

The use of circular walls for providing the cooperating guiding surfaces is very beneficial for guiding the top part and the bottom part in a rotational movement with respect to each other.

Circular walls provided on the outside of the bottom part and the top part offer the additional advantage of forming an enclosure of the at least one adjusting part, which is beneficial for protecting the internals of the at least one adjusting part.

In an embodiment of the present invention the bottom part and the top part are connected with each other by connecting means allowing the movement of the top part and the bottom part with respect to each other between the at least two predetermined positions.

The connecting means prevent the top part and the bottom part from becoming dislodged from each other, while still allowing the movement of the top part and the bottom part with respect to each other. This is an advantage since dislodging of the top part and the bottom part could render the at least one adjusting part inoperable, such that it needs to be reassembled.

In an embodiment of the present invention the connecting means comprise a resilient element arranged for pushing the top part and the bottom part against each other.

When the legs are positioned in the support positions of the inclined helical surfaces, then the resilient element pushes the legs tightly in the support positions, thereby preventing the legs from accidentally moving out of the support positions towards other support positions. Another advantage is that if the legs are moved out of the support positions to an intermediate location between different support positions, then the resilient element quickly pulls the legs into one of the support positions. This prevents the at least one adjusting part from getting stuck into an undesired position.

In an embodiment of the present invention the top plate is arranged for being connected to a formwork element.

The connection between the formwork element and the top plate of the adjustable floor box has the advantage that the position of the formwork element is fixed with respect to the adjustable floor box such that there are no openings between the adjustable floor box and the formwork element through which floor material, such as for example insulation foam or screed, may enter the adjustable floor box when the floor is installed. It ensures a clean installation of the adjustable floor box.

Connecting the formwork element with the floor box also has the advantage that the opening in the floor above the adjustable floor box is located at the optimal position for a good access to the cables in the adjustable floor box. It also ensures that the covering part to be arranged in the opening is well aligned with the floor box underneath.

In an embodiment of the present invention the adjusting means is provided with gripping means for facilitating the manual movement of the adjusting means between the at least two predetermined positions.

The inventors have found that the gripping means make it easier to operate the adjusting means while moving the adjusting means between the at least two predetermined positions.

In an embodiment of the present invention the adjusting means and the top plate are provided for being connected to each other.

Connecting the top plate with the adjusting means has the advantage that it prevents the top plate from accidentally sliding off the adjusting means. This is ensures that the top plate at all times covers the adjustable floor box such that no floor material may enter the adjustable floor box when the floor is installed around the adjustable floor box.

If the adjusting means is provided for moving between the at least two predetermined positions by means of rotation, then the adjusting means and the top plate are preferably provided for being rotatably connected to each other. This allows the adjusting means to be moved between the at least two predetermined positions even if the adjusting means are connected with the top plate.

In an embodiment of the present invention indicating means are provided on the adjusting means and on the top plate for indicating the at least two predetermined positions.

The indicating means offer the advantage that it may quickly be determined in which of the at least two predetermined positions the adjusting means is positioned. The indicating means also offer the advantage that they indicate how the adjusting means have to be operated to put the adjusting means in the desired predetermined position of the at least two predetermined positions.

In an embodiment of the present invention the adjustable floor box has a polygonal shape, and the adjusting means is arranged in each of the corners of the adjustable floor box.

It is advantageous to arrange the adjusting means in each of the corners of an adjustable floor box with a polygonal shape. In this way the side walls of the floor box remain free for making the connections with the floor trunking. This also leaves the space inside the adjustable floor box free for the cables.

In an embodiment of the present invention the adjusting means are provided with an outer wall which is a part of the side wall of the adjustable floor box in the corners.

This has the advantage that the adjusting means may be placed as close as possible to the corners of the adjustable floor box, such that as much room as possible is available at the side walls of the adjustable floor box for making the connections with the floor trunking. This also leaves more space for the cables in the adjustable floor box.

In an embodiment of the present invention the top plate is provided with folded edges.

The folded edges have the advantage of reinforcing the top plate. This allows the top plate to be made with a lower weight but with the same strength or even stronger than a heavier top plate without folded edges. The folded edges may for example be provided at the circumference of the top plate and at the edges of a central opening in the top plate allowing access to the adjustable floor box from above.

### Brief description of the drawings

The invention will be further elucidated by means of the following description and the appended figures.
Figure 1 shows in a perspective view from above an adjustable floor box according to an embodiment of the present invention.
Figure 2 shows the bottom plate of the adjustable floor box of Figure 1.
Figure 3 shows the top plate of the adjustable floor box of Figure 1.
Figure 4 shows in a perspective view from above the top plate of the adjustable floor box of Figure 1 and a formwork element.
Figure 5 shows in a perspective view from below the top plate and the formwork element of Figure 4 connected to each other.
Figure 6 shows in a perspective view from above an adjusting part of the adjustable floor box of Figure 1 positioned in the lowest predetermined position.
Figure 7 shows the adjusting part of Figure 6 positioned in the highest predetermined position.
Figure 8 shows in a perspective view from below the bottom part and the top part of the adjusting part of Figure 6.
Figure 9 shows in a perspective view from above the bottom part of the adjusting part of Figure 6.
Figure 10 shows an exploded view of a cover assembly according to an embodiment of the present invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

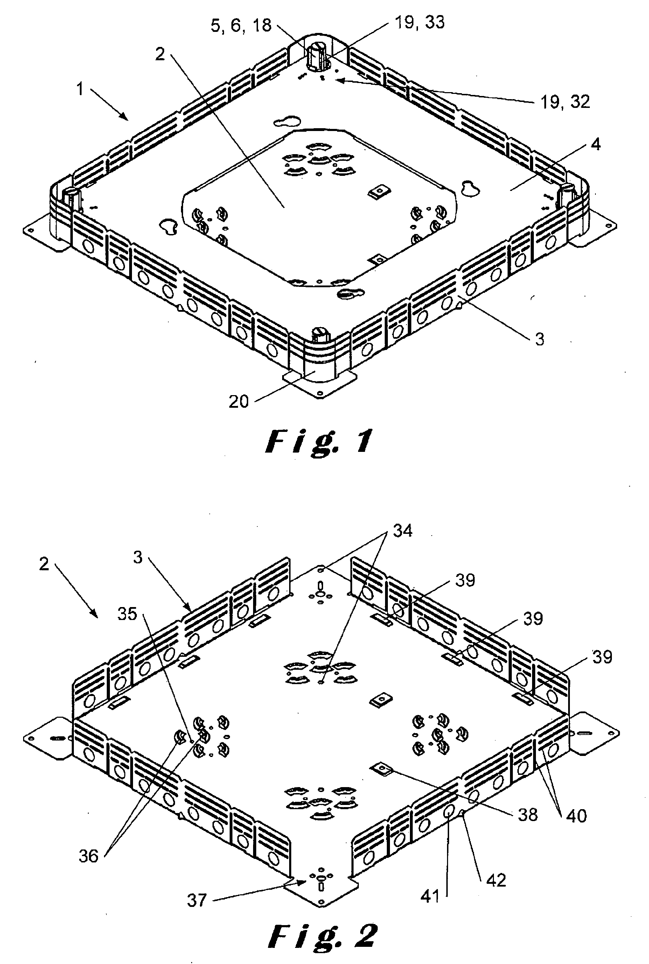

Figure 1 shows a perspective view of an embodiment of an adjustable floor box 1 according to the present invention. The figure illustrates the bottom plate 2 of the adjustable floor box 1 on which four adjusting parts 6 are arranged in the corners. The bottom plate 2 has side walls 3 which form together with the outer walls 20 of the adjusting parts 6 the side walls of the adjustable floor box 1. The top plate 4 of the adjustable floor box 1 is supported on the adjusting parts 6 and connected therewith.

The adjusting parts 6 are provided for positioning the top plate 4 at different predetermined distances from the bottom plate 2 corresponding to the height of different types of floor trunking (not shown). In an alternative embodiment an other structure for the adjusting means 5 is used to position the top plate 4 at different predetermined distances from the bottom plate 2. The adjusting means 5 comprise different predetermined positions, wherein each predetermined position of the adjusting means 5 positions the top plate 4 at a distance from the bottom plate 2 corresponding to the height of a different type of floor trunking. In the embodiment of Figure 1, the adjusting parts 6 comprise three predetermined positions which position the top plate at distances of 28 mm, 38 mm or 48 mm from the bottom plate 2, corresponding to the heights of three commonly used types of floor trunking.

Figure 1 further illustrates gripping means 18 on the adjusting parts 6. The gripping means 18 visible above the top plate 4. In the embodiment of Figure 1, the gripping means 18 are provided in the form of ribs extending over the height of the adjusting part. In alternative embodiments, the gripping means 18 may be an other structure which increases the grip on the adjusting parts 6. These gripping means 18 are turned for moving the adjusting parts 6 between the predetermined positions.

The adjusting parts 6 and the top plate 4 are provided with indicating means 19 for indicating in which of the predetermined positions the adjusting parts 6 are positioned. In the embodiment of Figure 1, the gripping means 18 on the adjusting parts 6 are provided with ribs 33 pointing to dotted markings 32 provided on the top plate 4. The top plate 4 is provided with a single dotted marking 32 for indicating a first predetermined position, with a double dotted marking 32 for indicating a second predetermined position, and with a triple dotted marking 32 for indicating a third predetermined position. As can be seen in the embodiment example shown in Figure 1, the adjusting parts 6 are positioned in the second predetermined position.

In the embodiment of Figure 1, the adjustable floor box 1 has a square shape. In alternative embodiments, the adjustable floor box has other shapes, such as circular, triangular, rectangular, pentagonal, or other polygonal shapes.

Figure 2 shows the bottom plate 2 of the adjustable floor box 1 of the embodiment of Figure 1 separately.

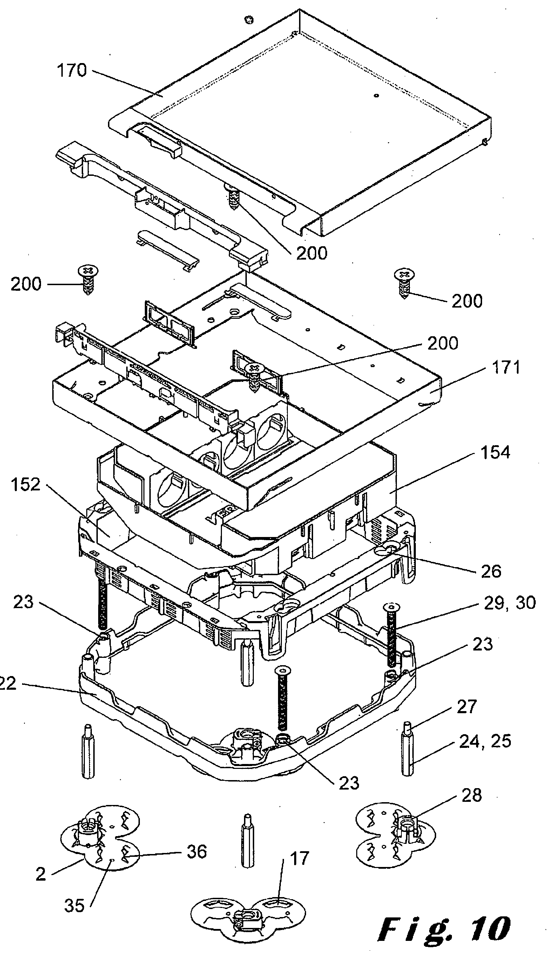

The bottom plate 2 is provided with a series of curved protruding walls 36 which are arranged in pairs with a small protrusion 35 in between each pair of curved protruding walls 36. One of the curved protruding walls 36 in each pair is provided with a central notch 17, as can be seen most clearly in Figure 10. The curved protruding walls 36 are used for connecting attaching elements 28 (shown in Figure 10) to the bottom plate 2. These attaching elements 28 are provided for attaching the stepwise adjusting means 24 of a cover assembly according to an embodiment of the invention with the bottom plate 2. The attaching elements 28 are slid in one direction in slots formed between the curved protruding walls 36 and the base plate of the bottom plate 2, after which the attaching elements 28 are rotated 90 degrees to engage under the curved protruding walls with edges on the attaching elements 28. The small hole 35 between the curved protruding walls 36 and the central notch 17 in the protruding walls 36 are provided for positioning the attaching elements 28 in the final position when they are rotated in the slots. In an alternative embodiment the hole 35 is a protrusion. Therefore, the attaching elements 28 are provided with corresponding holes and protrusions which are positioned in the small hole 35 and the central notch 17.

The bottom plate 2 of the adjustable floor box 1 is in the embodiment of Figure 2 further provided with openings 34 which are used for connecting the bottom plate 2 on the floor foundation on which the adjustable floor box 1 is arranged. These openings 34 are arranged in the far end of the corners of the bottom plate 2, and also nearby the curved protruding walls 36 in the bottom plate 2.

For aligning the adjustable floor box 1 on the floor foundation and for aligning the adjustable floor box 1 with the floor trunking, each side wall is provided centrally at the bottom with a protrusion 42 as a marking point.

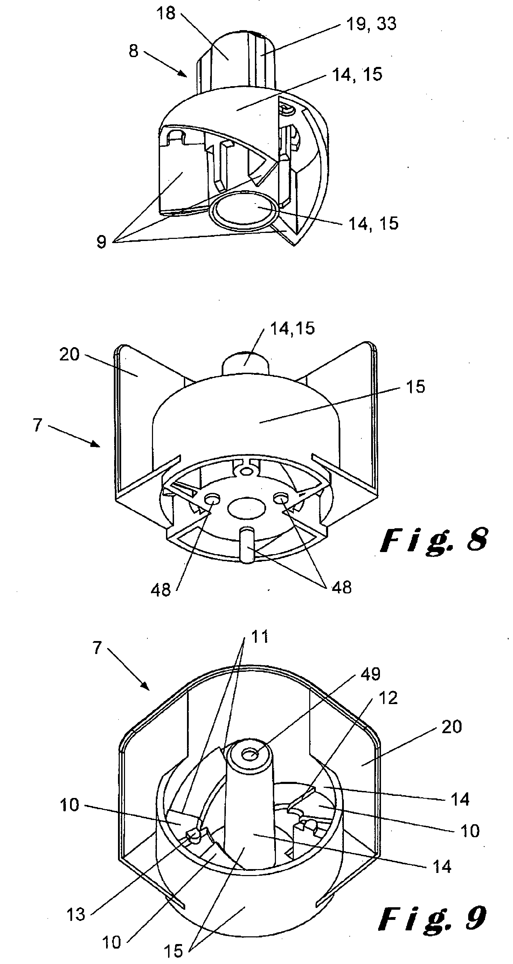

In the corners of the bottom plate, there are also provided openings 37 which are arranged in a "footprint" shape, i.e. one larger central opening with three smaller openings and a rectilinear opening arranged around it. In these openings 37 the adjusting parts 6 are positioned by means of protrusions 48 provided on the adjusting parts 6. Such protrusions 48 can be seen on the bottom part 7 of the adjusting part 6, shown in the embodiment of Figure 9.

Further, the bottom plate 2 is also provided with two ground terminal connection points 38. In the embodiment of Figure 2, these connection points 38 are rectangular protrusions provided with a hole.

Near the side walls, the bottom plate 2 is provided with protruding openings 39 facing the side walls. These protruding openings 39 are provided for connecting the floor trunking with the adjustable floor box 1 by sliding corresponding parts on the floor trunking in these protruding openings 39.

The side walls 3 of the bottom plate 2 are configured to provide openings for different types of floor trunking. Therefore, the side walls 3 are divided in pieces by means of vertically and horizontally arranged rectilinear openings 40 in the side walls 3. The rectilinear openings 40 are arranged at predetermined positions on the side walls 3, said predetermined positions corresponding with the height and width of different types of floor trunking. The rectilinear openings 40 allow the pieces, in which they divide the side walls 3, to be removed from the side walls 3. The pieces that are to be removed are chosen based on the height and the width of the floor trunking to be connected to the adjustable floor box 1.

The side walls 3 of the bottom plate 2 are also providing openings 41 for tubes carrying cables. In an alternative embodiment, the side walls 3 are provided with circular cut lines and these cut lines allow the parts of the side walls 3 surrounded by the cut lines to be removed from the side walls 3 by pushing them out, thereby leaving circular openings 41 through which the tubes may be arranged.

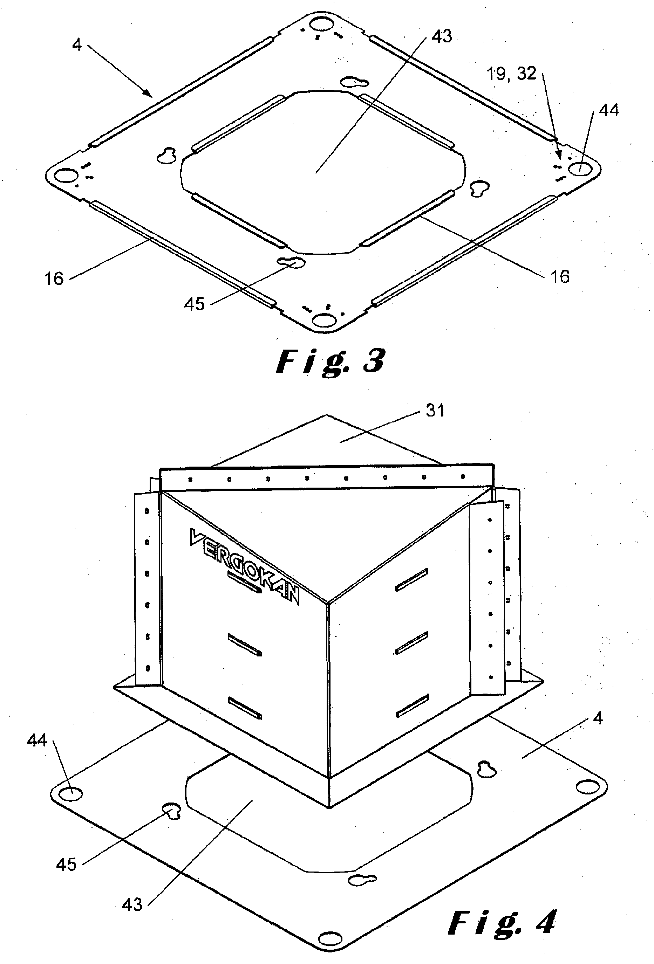

Figure 3 shows the top plate 4 of the adjustable floor box 1 of the embodiment of Figure 1 separately. The top plate 4 has a central opening 43 which provides access to the adjustable floor box 1 from above. In this way the cables arriving in the adjustable floor box are accessible for being connected with components arranged in a covering part which is suspended in a floor opening above the adjustable floor box 1, or which forms a part of a cover assembly according to an embodiment of the invention, such as shown for example in Figure 10.

Each corner of the top plate 4 has a connecting opening 44. These connecting openings 44 are used for connecting the top plate 4 with the adjusting parts 6. The gripping means 18 of the adjusting parts 6 are also inserted through the connecting openings 44, as can be seen in Figure 1, such that the adjusting parts 6 can be operated even when the top plate 4 is partially covering the adjusting parts 6.

Around the connecting openings 44, the top plate 4 is provided with dotted markings 32 which are provided, as discussed above, for indicating in which of the predetermined positions the adjusting parts 6 are positioned.

At the circumference and around the central opening 43 the top plate 4 is provided with folded edges 16 for reinforcing the top plate 4. These folded edges 16 are easily provided by folding over part of the top plate material at the circumference of the top plate 4 and around the central opening 43 in the top plate 4.

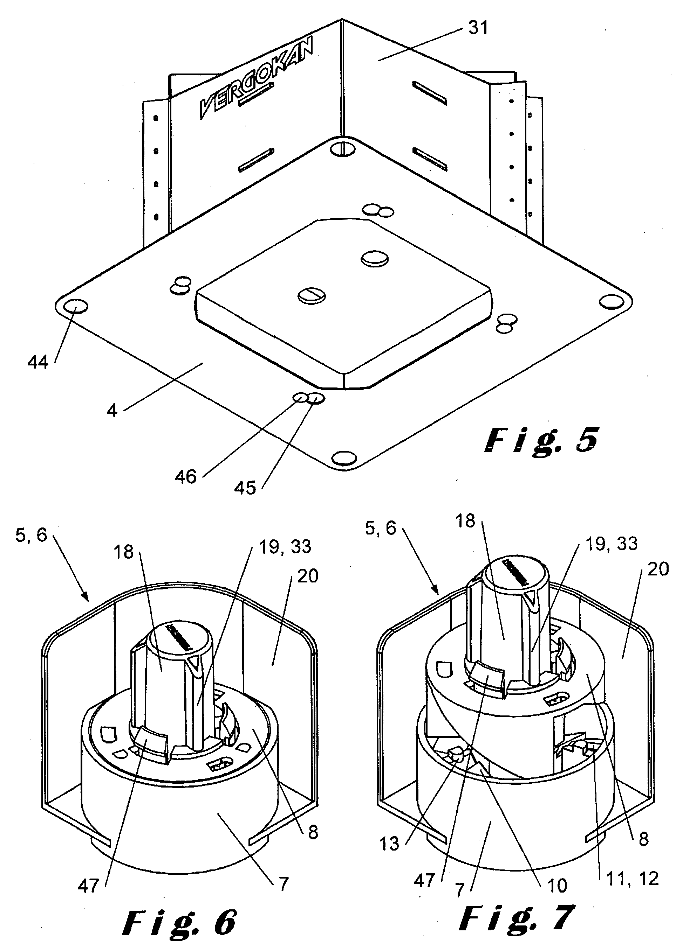

At each corner of the central opening 43 in the top plate 4 two interconnected circular openings 45 can be seen, a first circular opening having the largest diameter and a second circular opening having the smallest diameter. The interconnected circular openings 45 are provided for connecting a formwork element 31 to the top plate 4, as illustrated in Figures 4 and 5. For this purpose the formwork element 31 is provided with protrusions 46 which can be inserted through the first circular opening but engage in the second circular opening as will be discussed in more detail below. For connecting the formwork element 31 and the top plate 4 with each other, the protrusions 46 on the formwork element 31 are first positioned in the first circular opening and then moved to the second circular opening by slightly rotating the formwork element 31. This connection can be seen in Figure 5, whereas Figure 4 shows how the formwork element 31 is positioned above the top plate 4 before making the connection between both.

The formwork element 31 is used for leaving an opening in the floor above the central opening 43 in the top plate 4 of the adjustable floor box 1 when the floor is installed. This floor opening forms an access in the floor to the adjustable floor box 1, and in this opening the covering part is installed.

Figure 6 shows an adjusting part 6 of the adjustable floor box 1 of the embodiment of Figure 1. In this embodiment the adjusting part 6 is positioned in the lowest predetermined position of the predetermined positions of the adjusting means 5. In Figure 7 the adjusting part 6 is positioned in the highest predetermined position of the predetermined positions of the adjusting means 5. The adjusting parts 6 comprise a bottom part 7 and a top part 8, which are shown separate from each other in Figure 8. The bottom part 7 is shown separately in Figure 9.

The top part 8 supports on the bottom part 7, and both are configured for positioning the top part 8 at different predetermined distances with respect to the bottom part 7. The top part 7 is provided with three legs 9, which can be best seen in Figure 8. These legs 9 support on support positions 11 which are arranged on three inclined helical surfaces 10 provided on the bottom part 7. The inclined helical surfaces 10 can be best seen in Figure 9. Three support positions 11 are arranged at different heights on each of the inclined helical surfaces 10. A first support position 11 is provided at the bottom of each inclined helical surface 10, a second support position 11 is provided approximately halfway each inclined helical surface 10, and a third support position 11 is provided near the highest end of each inclined helical surface 11. The legs 9 are supported in these support positions 11, when the adjusting part 6 is moved to one of the predetermined positions. The legs supporting in the first support position 11 correspond with the first predetermined position of the adjusting means 5, and the other support positions 11 correspond similarly with the other predetermined positions. Figure 6 shows the adjustable part 6 in the first predetermined position and Figure 7 shows the adjustable part 6 in the third predetermined position.

The adjusting part 6 is moved between the different predetermined positions by rotating the top part 8 with respect to the bottom part 7 around a common axis. In this way, the legs 9 slide along the inclined helical surfaces 10 from one support position 11 to another support position 11, until the legs 9 are rested in one of the support positions 11. If the legs 9 are positioned in between support positions on the inclined helical surfaces 10, then gravity will pull the legs 9 back to support positions 11 which are arranged on a lower part of the inclined helical surfaces 10.

The bottom part 7 and the top part 8 are guided in their motion with respect to each other by means of cooperating guiding surfaces 14. The guiding surfaces 14 are in the shown embodiment provided by circular walls 15 which are arranged at the centre and at the circumference of both the bottom part 7 and the top part 8. The circular walls 15 are provided such that a circular wall 15 on the bottom part 7 and a circular wall 15 on the top part 8 fit into each other. In this way, the sides of the circular walls 15 which face each other form the guiding surfaces 14. An advantage of the circular walls 15 is that they prevent sideway movements of the bottom part 7 and the top part 8 with respect to each other.

For facilitating the manual movement of the top part 8 with respect to the bottom part 7, the adjusting part 6 is provided on top with gripping means 18. The gripping means 18 is in the embodiment of Figure 8 provided with ribs 33 which, as explained above, are also part of the indicating means 19 for indicating in which predetermined position the adjusting part 6 is positioned.

The support positions 11 are provided with protruding edges 12, which prevent the legs 9 from sliding out of the support positions 11 towards support positions 11 which are arranged on a lower part of the inclined helical surfaces 10. These protruding edges 12 can be seen in Figure 9.

At the highest end, each inclined helical surface 10 is provided with an upstanding wall 13. The upstanding wall 13 prevents the leg 9 from moving beyond the highest end of the inclined helical surface 10 on to a following inclined helical surface 10. These upstanding walls 13 can be seen in Figure 9.

The top part 8 is provided for being connected with the top plate 4 of the adjustable floor box 1. For this purpose, the top part 1 is provided with clicking legs 47, as can be seen in Figures 6 and 7. For connecting the top part 8 with the top plate 4 the clicking legs 47 are inserted through connecting openings 44 provided on the top plate 4, which can be seen in Figure 3. Once inserted through the connecting openings 44, the clicking legs 47 engage in the connecting openings 44, thereby forming the connection between the top part 8 and the top plate 4.

The bottom part 7 is provided for being connected with the bottom plate 2 of the adjustable floor box 1. Therefore, the bottom part 7 is provided at the bottom with a series of protrusions 48, as can be seen in Figure 9. For connecting the bottom part 7 with the bottom plate 2, these protrusions 48 are positioned in openings 37 provided in the bottom plate 2 for this purpose. These openings 37 can be seen in Figure 2.

The bottom part 7 is provided with an outer wall 20. When the bottom part 7 is installed on the bottom plate 2, then the outer wall 20 forms a part of the side walls of the adjustable floor box 1, as can be seen in Figure 1.

The bottom part 7 and the top part 8 can be connected with each other with connecting means (not shown). In the adjusting part 6 according to the embodiment of Figures 6-9, the connecting means comprise a bolt arranged in the circular wall 15 at the centre of the bottom part 7, and passing through an opening 49 on top of said circular wall 15. The bolt passing through said opening 49 is screwed into the top part 8 for forming the connection between the bottom part 7 and the top part 8. The bolt has a bolt head which is too large to pass through the opening 49 on top of the circular wall 15 in which the bolt is arranged. In this way, the bottom part 7 and the top part 8 can not get detached from each other. The length of the bolt should be so long as to allow the legs 9 of the top part 8 to be lifted completely over the inclined helical surfaces 10 and an upstanding wall 13 thereon. In an embodiment of the connecting means a resilient element, such as a spring, is provided between the bolt head and the opening 49 on top of the circular wall 15 in which the bolt is arranged. The resilient element is provided for pushing the top part 8 and the bottom part 7 against each other.

The number of support positions 11 on each inclined helical surface 10 is determined by the number of predetermined positions of the adjusting means 5 for positioning the top plate 4 at a distance from the bottom plate 2 of the adjustable floor box 1. The location of the support positions 11 along the inclined helical surfaces 10 is chosen based on the distances at which the adjusting means 5 have to position the top plate 4 from the bottom plate 2 of the adjustable floor box 1. These distances are determined by the height of the types of floor trunking that will be connected to the adjustable floor box 1.

In alternative embodiments, there are more or less legs 9 and inclined helical surfaces 10 than three.

In an alternative embodiment, the inclined helical surfaces 10 are provided on the top part 8 instead of on the bottom part 7, in which case the legs 9 are provided on the bottom part 7. In this way the top part 8 supports with the support positions 11 of the inclined helical surfaces 10 on the legs 9 of the bottom part 7.

Figure 10 shows an exploded view of the cover assembly according to an embodiment of the invention.

At the bottom of the figure the bottom plate 2 of a floor box 1 is partially shown. The cover assembly illustrated in Figure 10 is configured to be installed on the bottom plate 2. Only partial views of the bottom plate 2 are shown. The partial views are showing parts of the bottom plate 2 which are provided with attaching elements 28 for attaching the cover assembly to the bottom plate 2. In the embodiment of Figure 10, the attaching elements 28 are arranged between curved protruding walls 36 on the bottom plate 2, as discussed above.

The stackable elements 25 of the stepwise adjusting means 24 are inserted in the attaching elements 28. For attaching the stackable elements 25 to the bottom plate 2, they are clamped by the attaching elements 28. The stackable elements 25 are provided with an internally threaded opening (not visible) at one end, and an externally threaded connecting part 27 at the opposite end. This allows the stackable elements 25 to be stacked onto each other and connected with each other for positioning a support frame 22 at a distance from the bottom plate 2. The stackable elements 25 have a predetermined length, such that the support frame 22 may be positioned at a distance from the bottom plate 2 in steps of predetermined length. The stackable elements 25 can be connected with the support frame 22 by screwing the connecting part 27 of the stackable elements 25 into internally threaded openings (not visible) provided at the bottom of the support frame 22.

The cover assembly according to the embodiment of Figure 10 also comprises precise adjusting means 29. The precise adjusting means 29 are arranged on top of the support frame 22 and are used for positioning a covering part of the cover assembly at a distance from the support frame 22. The precise adjusting means 29 comprise screws 30 which are screwed into internally threaded openings 23 through the support frame 22. By screwing the screws 30 inwards or outwards of the threaded openings 23 in the support frame 22, the height of the precise adjusting means 29 may be adjusted.

The precise adjusting means 29 are connected to the covering part, which comprises a cover 170, a cover frame 171, a component holder 154 and a component holder frame 152. The covering part and the precise adjusting means 29 are connected to each other by arranging the heads of the screws 30 in between the component holder frame 152 and the cover frame 171. Therefore, the component holder frame 152 is provided with interconnected circular openings 26. For connecting the precise adjusting means 29 to the covering part, the screw head is inserted through the first circular opening with a diameter larger than the screw head, after which the screw 30 is moved to the second circular opening with a diameter smaller than the screw head. The cover frame 171 is then attached to the component holder frame 152 above the screw head. In the cover frame 171 there are openings with a smaller diameter than the screw head, which openings allow access of a screw driver to the screw head. In this way, the covering part moves together with the screws 30 when the screws 30 are screwed inwards or outwards of the threaded openings 23 through the support frame 22, allowing the distance of the covering part with respect to the support frame 22 to be adjusted precisely.

The cover frame 171 and the component holder frame 152 are arranged such that the distance between both may be varied. This may for example be achieved by connecting the cover frame 171 and the component holder frame 152 to each other with screws 200.

With a larger distance between the cover frame 171 and the component holder frame 152, the screw heads may move within a larger range between the component holder frame 152 and the cover frame 171. In this way the covering part is loosely connected to the precise adjusting means 29, allowing some movement of the covering part with respect to the precise adjusting means 29. This has the advantage that the covering part may be moved over a larger distance in each corner before the height of the covering part also needs to be adjusted in the others corners because the covering part is tilted and cannot be moved further in one of the corners.

With a smaller distance between the cover frame 171 and the component holder frame 152, the covering part is better attached to the precise adjusting means 29, while still allowing the height of the covering part to be adjusted with respect to the support frame 22 but now only in a smaller range in each corner before the other corners also have to be adjusted in height. This smaller distance should be not so small that the screw heads may not be rotated anymore. The screw heads should thus not be completely clamped between the cover frame 171 and the component holder frame 152.

Hence, for adjusting the height of the covering part with respect to the support frame 22 with the precise adjusting means 29, it is beneficial to first position the cover frame 171 at a larger distance with respect to the component holder frame 152. This allows the precise adjusting means 29 to operate over a large range in each corner of the covering part before the other corners also have to be adjusted. In this way the height of the upper surface of the covering part may be quickly set very close to the height of the upper surface of the floor. Afterwards the covering part may be fixed better to the precise adjusting means 29 by decreasing the distance between the cover frame 171 and the component holder frame 152, thereby still allowing a final fine-tuning of the height of the covering part with respect to the support frame 22.

## Claims

1. An adjustable floor box (1) for at least two types of floor trunking, each type of floor trunking having a different height, the adjustable floor box (1) comprising:
- a bottom plate (2) having side walls (3) configured to provide openings for the floor trunking,
- a top plate (4) for at least partially covering the bottom plate (2), and
- adjusting means (5) for positioning the top plate (4) at a distance from the bottom plate (2),
**characterised in that** the adjusting means (5) comprises at least two predetermined positions, wherein a first predetermined position of the adjusting means (5) positions the top plate (4) at a distance from the bottom plate (2) corresponding to the height of a first type of floor trunking, and wherein a second predetermined position of the adjusting means (5) positions the top plate (4) at a distance from the bottom plate (2) corresponding to the height of a second type of floor trunking.

2. The adjustable floor box (1) according to claim 1, wherein the adjusting means (5) comprises at least one adjusting part (6), each adjusting part (6) comprising a bottom part (7) and a top part (8) with the top part (8) supported by the bottom part (7) in the at least two predetermined positions, and wherein the top plate (4) is supported by each top part (8).

3. The adjustable floor box (1) according to claim 2, wherein the top part (8) and the bottom part (7) of each of the at least one adjusting part (6) are rotatable with respect to each other around a common axis for moving each of the at least one adjusting part (6) between the at least two predetermined positions.

4. The adjustable floor box (1) according to claim 2 or 3, wherein for each of the at least one adjusting part (6) one of the bottom part (7) and the top part (8) is provided with a plurality of legs (9), and wherein the other part is provided with a corresponding number of inclined helical surfaces (10) which are provided with at least two support positions (11) in which the legs (9) are positioned in the at least two predetermined positions of the adjusting means (5).

5. The adjustable floor box (1) according to claim 4, wherein the legs (9) and the inclined helical surfaces (10) are arranged rotationally symmetric around a common axis.

6. The adjustable floor box (1) according to claim 4 or 5, wherein the support positions (11) are provided with a protruding edge (12) for averting the movement of the legs (9) to support positions (11) at lower parts of the inclined helical surfaces (10).

7. The adjustable floor box (1) according to any one of the claims 2-6, wherein the top part (8) and the bottom part (7) are provided with cooperating guiding surfaces (14) for guiding the movement of the bottom part (7) and the top part (8) with respect to each other between the at least two predetermined positions.

8. The adjustable floor box (1) according to any one of the claims 2-7, wherein the bottom part (7) and the top part (8) are connected with each other by connecting means allowing the movement of the top part (8) and the bottom part (7) with respect to each other between the at least two predetermined positions.

9. The adjustable floor box (1) according to claim 8, wherein the connecting means comprise a resilient element arranged for pushing the top part (8) and the bottom part (7) against each other.

10. The adjustable floor box (1) according to any one of the claims 1-9, wherein the adjusting means (5) is provided with gripping means (18) for facilitating the manual movement of the adjusting means (5) between the at least two predetermined positions.

## Patentansprüche

1. Verstellbare Bodendose (1) für zumindest zwei Arten von Bodenkanälen, wobei jede Art von Bodenkanal eine unterschiedliche Höhe aufweist, wobei die verstellbare Bodendose (1)
- eine Bodenplatte (2) mit Seitenwänden (3), die dazu ausgebildet sind, Öffnungen für den Bodenkanal bereitzustellen,
- eine obere Platte (4), um die Bodenplatte (2) zumindest teilweise abzudecken, und
- ein Verstellmittel (5), um die obere Platte (4) in einem Abstand von der Bodenplatte (2) zu positionieren,
umfasst, **dadurch gekennzeichnet, dass** das Verstellmittel (5) zumindest zwei vorherbestimmte Positionen umfasst, wobei eine erste vorherbestimmte Position des Verstellmittels (5) die obere Platte (4) in einem Abstand von der Bodenplatte (2) positioniert, der der Höhe einer ersten Art von Bodenkanal entspricht, und wobei eine zweite vorherbestimmte Position des Verstellmittels (5) die obere Platte (4) in einem Abstand von der Bodenplatte (2) positioniert, der der Höhe einer zweiten Art von Bodenkanal entspricht.

2. Verstellbare Bodendose (1) nach Anspruch 1, wobei das Verstellmittel (5) zumindest einen Verstellteil (6) umfasst, jeder Verstellteil (6) einen unteren Teil (7) und einen oberen Teil (8) umfasst, wobei der obere Teil (8) in den zumindest zwei vorherbestimmten Positionen durch den unteren Teil (7) gestützt wird, und wobei die obere Platte (4) durch jeden oberen Teil (8) gestützt wird.

3. Verstellbare Bodendose (1) nach Anspruch 2, wobei der obere Teil (8) und der untere Teil (7) eines jeden aus dem zumindest einen Verstellteil (6) in Bezug zueinander um eine gemeinsame Achse drehbar sind, um jedem aus dem zumindest einen Verstellteil (6) zwischen den zumindest zwei vorherbestimmten Positionen zu bewegen.

4. Verstellbare Bodendose (1) nach Anspruch 2 oder 3, wobei für jeden aus dem zumindest einen Verstellteil (6) eines aus dem unteren Teil (7) und dem oberen Teil (8) mit mehreren Schenkeln (9) versehen ist, und wobei der andere Teil mit einer entsprechenden Anzahl von schrägen spiralförmigen Flächen (10) versehen ist, die mit zumindest zwei Stützpositionen (11) versehen sind, in denen die Schenkel (9) in den zumindest zwei vorherbestimmten Positionen des Verstellmittels (5) positioniert sind.

5. Verstellbare Bodendose (1) nach Anspruch 4, wobei die Schenkel (9) und die schrägen spiralförmigen Flächen (10) rotationssymmetrisch um eine gemeinsame Achse angeordnet sind.

6. Verstellbare Bodendose (1) nach Anspruch 4 oder 5, wobei die Stützpositionen (11) mit einem Überstand (12) versehen sind, um die Bewegung der Schenkel (9) zu Stützpositionen (11) an niedrigeren Teilen der schrägen spiralförmigen Flächen (10) zu verhindern.

7. Verstellbare Bodendose (1) nach einem der Ansprüche 2 bis 6, wobei der obere Teil (8) und der untere Teil (7) mit zusammenwirkenden Führungsflächen (14) versehen sind, um die Bewegung des unteren Teils (7) und des oberen Teils (8) in Bezug zueinander zwischen den zumindest zwei vorherbestimmten Positionen zu führen.

8. Verstellbare Bodendose (1) nach einem der Ansprüche 2 bis 7, wobei der untere Teil (7) und der obere Teil (8) durch Verbindungsmittel, die die Bewegung des oberen Teils (8) und des unteren Teils (7) in Bezug zueinander zwischen den zumindest zwei vorherbestimmten Positionen gestatten, miteinander verbunden sind.

9. Verstellbare Bodendose (1) nach Anspruch 8, wobei die Verbindungsmittel ein elastisches Element umfassen, das eingerichtet ist, um den oberen Teil (8) und den unteren Teil (7) zueinander zu schieben.

10. Verstellbare Bodendose (1) nach einem der Ansprüche 1 bis 9, wobei das Verstellmittel (5) mit einem Greifmittel (18) versehen ist, um die manuelle Bewegung des Verstellmittels (5) zwischen den zumindest zwei vorherbestimmten Positionen zu erleichtern.

## Revendications

1. Boîte de sol ajustable (1) pour au moins deux types de conduites au sol, chaque type de conduites au sol présentant une différente hauteur, la boîte de sol ajustable (1) comprenant :
- une plaque inférieure (2) présentant des parois latérales (3) configurées pour fournir des ouvertures pour la conduite au sol,
- une plaque supérieure (4) pour couvrir au moins partiellement la plaque inférieure (2) et
- un moyen d'ajustement (5) pour le positionnement de la plaque supérieure (4) à une distance de la plaque inférieure (2),
**caractérisée en ce que** le moyen d'ajustement (5) comprend au moins deux positions prédéterminées, dans laquelle une première position prédéterminée du moyen d'ajustement (5) positionne la plaque supérieure (4) à une distance de la plaque inférieure (2) correspondant à la hauteur d'un premier type de conduites au sol, et dans laquelle une seconde position prédéterminée du moyen d'ajustement (5) positionne la plaque supérieure (4) à une distance de la plaque inférieure (2) correspondant à la hauteur d'un second type de conduites au sol.

2. Boîte de sol ajustable (1) selon la revendication 1, dans laquelle le moyen d'ajustement (5) comprend au moins une partie d'ajustement (6), chaque partie d'ajustement (6) comprenant une partie inférieure (7) et une partie supérieure (8) avec la partie supérieure (8) supportée par la partie inférieure (7) dans les aux moins deux positions prédéterminées, et dans laquelle la plaque supérieure (4) est supportée par chaque partie supérieure (8).

3. Boîte de sol ajustable (1) selon la revendication 2, dans laquelle la partie supérieure (8) et la partie inférieure (7) de chacune de l'au moins une partie d'ajustement (6) sont rotatives l'une par rapport à l'autre autour d'un axe commun pour le déplacement de chacune de l'au moins une partie d'ajustement (6) entre les au moins deux positions prédéterminées.

4. Boîte de sol ajustable (1) selon la revendication 2 ou 3, dans laquelle pour chacune de l'au moins une partie d'ajustement (6), une de la partie inférieure (7) et la partie supérieure (8) est dotée d'une pluralité de jambes (9), et dans laquelle l'autre partie est dotée d'un nombre correspondant de surface hélicoïdales inclinées (10) qui sont dotées d'au moins deux positions de support (11), dans lesquelles les jambes (9) sont positionnées dans les au moins deux positions prédéterminées du moyen d'ajustement (5).

5. Boîte de sol ajustable (1) selon la revendication 4, dans laquelle les jambes (9) et les surfaces hélicoïdales inclinées (10) sont agencées en symétrie de rotation autour d'un axe commun.

6. Boîte de sol ajustable (1) selon la revendication 4 ou 5, dans laquelle les positions de support (11) sont dotées d'une arête en saillie (12) pour éviter le mouvement des jambes (9) vers les positions de support (11) sur des parties inférieures des surfaces hélicoïdales inclinées (10).

7. Boîte de sol ajustable (1) selon l'une quelconque des revendications 2 à 6, dans laquelle la partie supérieure (8) et la partie inférieure (7) sont dotées de surfaces de guidage coopérantes (14) pour guider le mouvement de la partie inférieure (7) et la partie supérieure (8) l'une par rapport à l'autre entre les au moins deux positions prédéterminées.

8. Boîte de sol ajustable (1) selon l'une quelconque des revendications 2 à 7, dans laquelle la partie inférieure (7) et la partie supérieure (8) sont reliées l'une à l'autre par des moyens de liaison permettant le mouvement de la partie supérieure (8) et la partie inférieure (7) l'une par rapport à l'autre entre les au moins deux positions prédéterminées.

9. Boîte de sol ajustable (1) selon la revendication 8, dans laquelle les moyens de connexion comprennent un élément élastique agencé pour pousser la partie supérieure (8) et la partie inférieure (7) l'une contre l'autre.

10. Boîte de sol ajustable (1) selon l'une quelconque des revendications 1 à 9, dans laquelle le moyen d'ajustement (5) est doté de moyens de préhension (18) pour faciliter le mouvement manuel du moyen d'ajustement (5) entre les au moins deux positions prédéterminées.
